(19) **Europäisches Patentamt**

**European Patent Office**

**Office européen des brevets**

(11) **EP 0 878 521 B1**

(12) **EUROPÄISCHE PATENTSCHRIFT**

(45) Veröffentlichungstag und Bekanntmachung des Hinweises auf die Patenterteilung:
**10.05.2000 Patentblatt 2000/19**

(51) Int Cl.7: **C09D 11/00**

(21) Anmeldenummer: **98101927.6**

(22) Anmeldetag: **04.02.1998**

(54) **Tintenstrahl-Druckverfahren und Tintenset für den Mehrfarben-Tintenstrahldruck**

Ink-jet printing process and ink set for multi-colour printing

Procédé d'impression par jet d'encre et assortiment d'encres pour la production d'images multicolorés

(84) Benannte Vertragsstaaten:
**CH DE FR GB IT LI**

(30) Priorität: **13.05.1997 DE 19720004**

(43) Veröffentlichungstag der Anmeldung:
**18.11.1998 Patentblatt 1998/47**

(73) Patentinhaber: **PELIKAN PRODUKTIONS AG
8132 Egg (CH)**

(72) Erfinder:
- **Loosli, Daniel
  8610 Uster (CH)**
- **Drescher, Peter
  8632 Tann/ZH (CH)**
- **Mancini, Bruno
  5212 Hausen (CH)**
- **Schudel, Markus
  8052 Zürich (CH)**

(74) Vertreter:
**Hagemann, Heinrich, Dr.rer.nat., Dipl.-Chem. et al
Patentanwälte
Hagemann, Braun & Held,
Postfach 86 03 29
81630 München (DE)**

(56) Entgegenhaltungen:
**EP-A- 0 586 079          US-A- 5 679 143**

**Beschreibung**

Die vorliegende Erfindung betrifft ein Tintenstrahl-Druckverfahren und ein Tintenset für den Mehrfarben-Tintenstrahldruck.

Der Tintenstrahldruck (Ink-Jet-Druck) findet, insbesondere für sogenannte "Desk Top Publishing"-Anwendungen, zunehmende Verbreitung, was insbesondere auf seine Fähigkeit zurückzuführen ist, mehrfarbige Aufdrucke durch Auftrag von drei oder mehreren Primärtinten auf ein Substrat in einem einzigen Durchlauf zu erstellen. Andere Druckverfahren erfordern im allgemeinen für jede Primärfarbe einen Durchlauf durch den Drucker. Ein wichtiger Vorteil der Tintenstrahldrucker liegt außerdem in deren günstigem Preis.

Thermische Tintenstrahldrucksysteme spielen eine besonders wichtige Rolle. Diese weisen ein Tintenreservoir in flüssigkeitsleitender Verbindung mit einem Druckkopf auf, auf dem sich eine Mehrzahl von Widerständen befinden. Die selektive Aktivierung der Widerstände verursacht eine thermische Anregung der Tinte und deren Herausschleudern. Beispielhafte thermische Tintenstrahldrucksysteme werden in den US-PSen 5 500 895 und 4 794 409 beschrieben.

Andere Systeme beruhen auf der sogenannten Piezo-Technik, bei der durch einen Stromimpuls ein Piezo-Element angeregt wird und dadurch ein Tintentropfen herausgeschleudert wird.

Durch Einsatz spezieller Tintenstrahl-Druckköpfe mit einer Mehrzahl einzelner Tintenkompartimente ist die Erzeugung mehrfarbiger Bilder möglich. Jedes Kompartiment hält eine ausgewählte Tinte mit speziellen Farbeigenschaften vor. Durch Vereinigen dieser Tintenmaterialien auf einem Substrat, z.B. Papier, in variierenden Konfigurationen und Mengen können mehrfarbige Bilder mit hoher Auflösung und Klarheit hergestellt werden.

Beim Herstellen mehrfarbiger Bilder durch den Tintenstrahldruck tritt jedoch ein Problem auf, wenn eine Tinte einer Farbe auf oder in unmittelbarer Nähe neben einer Tinte einer anderen Farbe aufgetragen wird. Das Problem äußert sich in einem Vermischen oder Ineinanderlaufen der zwei Tinten an ihrer Grenzfläche, wodurch die Grenzlinie zwischen den Tinten verunklart wird, z.B. an den äußeren Kanten. Wenn z.B. ein schwarzer Bildbezirk unmittelbar neben einen gelben Bildbezirk gedruckt wird, wird meistens eine Diffusion der scharzen Tinte in die gelbe Tinte beobachtet. Es werden unzureichende Bilder mit schlechter Auflösung erhalten. Dieses Phänomen ist Fachleuten auf dem Gebiet der Drucktechnologie auch unter der Bezeichnung "Colourbleeding" bekannt. Zusätzlich können Probleme des Ineinanderlaufens der Farben bei Mehrfachtintensystemen durch Kapillarkräfte hervorgerufen werden, die von den gewöhnlich verwendeten Papiersubstraten herrühren. Diese Kapillarkräfte führen dazu, daß Drucktinten in benachbarte Bereiche gesogen werden. Auch dies führt zu einem Ausdruck schlechter Qualität und Auflösung.

Zur Verminderung bzw. Verhinderung des Ineinanderlaufens der Tinten an den Berührungslinien sind bereits verschiedene Verfahren vorgeschlagen worden. So sollte durch eine schnellere Penetration der Tinten in das zu bedruckende Medium das Problem des Bleedings minimiert werden. Eine derartige schnellere Penetration kann durch den Zusatz oberflächenaktiver Stoffe, wie Tenside, Netzmittel, Alkohole, Lösungsmittel und dergleichen, zu den Drucktinten erreicht werden. Dies wird z.B. in den US-PSen 5 106 416 und 5 196 056 vorgeschlagen. Dieser Problemlösungsansatz führt allerdings nur zu einer unzureichenden Verminderung des Bleedings. Weitere Nachteile bestehen in einem erhöhten "Feathering", d.h. die Tinten neigen nun noch stärker dazu, den Papierfasern entlangzulaufen. Durch die schnellere Penetration in das Papier wird auch der an der Papieroberfläche zur Verfügung stehende Anteil des Farbstoffes kleiner. Dies führt zu einer Reduzierung der optischen Dichte und wirkt sich besonders stark bei schwarzer Tinte auf weißem Papier aus. Zusammenhängende Farbflächen erscheinen nicht mehr satt schwarz sondern grau.

Bei einer Modifikation dieses Verfahrens wird an den Berührungsflächen eine schnell penetrierende Tinte unter eine langsam penetrierene Tinte gedruckt. Dadurch penetriert an diesen Stellen auch die langsam penetrierende Tinte schneller in das Papier und das Bleeding wird reduziert. Der Druckvorgang wird hierbei durch eine speziell programmierte Software gesteuert. Vorzugsweise ist die scharze Tinte die langsam penetrierende Tinte und eine farbige Tinte die schnell penetrierende Tinte. Auch bei dieser Modifikation wird das Bleeding insgesamt zu wenig vermindert. Außerdem wird ein schwächeres und im Farbton unterschiedliches Schwarz erhalten.

Bei einer anderen Modifikation werden an den Berührungsflächen alle Farben übereinandergedruckt, wobei die farbigen Tinten schnell penetrierende Tinten sind und die schwarze Tinte eine langsam penetrierende Tinte ist. Auch bei diesem Vorschlag wird die optische Dichte der schwarzen Tinte wiederum durch die schnellere Penetration vermindert, dies wird jedoch durch die Mischfarbe der Farbtinten ergänzt, die aufgrund der subtraktiven Farbmischung zu einem schwarzen Farbton führen. Die Nachteile bestehen auch hier in einer unzureichenden Verminderung des Bleedings und einem im Farbton unterschiedlichen Schwarz.

Ein anderer Vorschlag ist in der EP 0 705 889 A1 vorgestellt, der sich gelbildender Tinten bedient. Eine Tinte, vorzugsweise die schwarze Tinte, enthält ein gelbildendes Reagenz und eine andere Tinte, vorzugsweise die farbigen Tinten, ein gelinitiierendes Reagenz. Beim Zusammentreffen an der Berührungslinie bildet sich zwischen den beiden Tinten eine Gelbarriere. Das gebildete Gel trocknet allerdings sehr langsam, wodurch die Wischfestigkeit verschlechtert wird. Außerdem besitzen die Tinten eine unzureichende Lagerstabilität, weil durch die Gegenwart des gelbildenden bzw. gelinitiierenden Reagenzes ein höheres Instabilitätsrisiko hervorgerufen wird. Beim Eintrocknen der Tinte an der Druckerdüse erhöht sich die Viskosität außerdem sehr stark, was zu einem erhöhten Risiko des Verstopfens ("Clogging") führt.

Als Markprodukt ist ferner ein Tintenset bekannt, bei dem eine erste Tinte einen Farbstoff enthält, der durch ein Fällungsreagenz ausgefällt werden kann. Eine zweite Tinte enthält das Fällungsreagenz neben einem zweiten Farbstoff. Nachteilig ist hierbei, daß das Fällungsreagenz der zweiten Tinte in hoher Konzentration beigemischt werden muß, was ein beträchtliches Instabilitätsrisiko bzw. Kogationsrisiko mit sich bringt. Der hohe Anteil an Fällungsreagenz kann außerdem zu Korrosionsproblemen führen. Die Fällungsmittel sind z.B. höhervalente Metallsalze, wie $Ca^{2+}$, $Cu^{2+}$, $Co^{2+}$, $Ni^{2+}$ usw. Die Auswahl an Farbstoffen, die in der zweiten Tinte vorliegen können, ist sehr begrenzt, da nur solche Farbstoffe in Betracht kommen, die in Anwesenheit des Fällungsreagenzes über längere Zeit löslich bzw. dispergiert bleiben.

Der vorliegenden Erfindung lag daher die Aufgabe zugrunde, ein Mehrfarben-Tintenstrahldruckverfahren bereitzustellen, das die vorstehend geschilderten Nachteile nicht aufweist, und bei dem insbesondere das Bleeding an den Berührungslinien unterschiedlicher Farben ausreichend reduziert ist, wobei der Farbton der gedruckten Tinte nicht verändert wird, eine hohe optische Dichte der Tinten erhalten bleibt und die verwendeten Drucktinten ausreichende Lagerstabilität aufweisen.

Erfindungsgemäß wird diese Aufgabe durch ein Tintenstrahl-Druckverfahren gelöst, bei dem eine erste, eine zweite und wahlweise eine dritte bzw. weitere Tinte gleichzeitig oder nacheinander aufeinander oder unmittelbar nebeneinander gedruckt werden, wobei

(i) die erste Tinte ein durch ein Fällungsreagenz ausfällbares Farbmittel,
(ii) die erste oder zweite Tinte das Fällungsreagenz in temporär passivierter Form und
(iii) die erste, zweite oder dritte Tinte einen Aktivator für das temporär passivierte Fällungsreagenz enthält,

mit der Maßgabe, daß das temporär passivierte Fällungsreagenz und der Aktivator nicht in derselben Tinte vorliegen.

Im Rahmen der Erfndung sind somit folgende Konstellationen möglich:

(a) das ausfällbare Farbmittel und das temporär passivierte Fällungsreagenz können in der ersten Tinte und der Aktiviator in der zweiten Tinte enthalten sein.

(b) Das ausfällbare Farbmittel und der Aktivator können in der ersten Tinte und das temporär passivierte Fällungsreagenz in der zweiten Tinte enthalten sein.

(c) Das ausfällbare Farbmittel kann in der ersten Tinte, das temporär passivierte Fällungsreagenz in der zweiten Tinte und der Aktivator in der dritten Tinte enthalten sein.

Ein Farbmittel ist eine chemische Verbindung, die dazu verwendet wird, einer Drucktinte eine angestrebte Farbcharakteristik zu verleihen. Das Farbmittel kann ein wasserlöslicher Farbstoff, eine Pigmentdispersion oder eine Mikroemulsion sein. Wasserlösliche Farbstoffe sind bekannt. Sie können den anionischen, kationischen, amphoteren oder nichtionischen Farbstoffen zugerechnet werden. Anionische Farbstoffe bilden in wäßriger Lösung farbige Anionen, kationische Farbstoffe bilden in wäßriger Lösung farbige Kationen. Üblicherweise umfassen anionische Farbstoffe Carboxyl- oder Sulfonsäuregruppen. Kationische Farbstoffe enthalten üblicherweise quaternäre Stickstoffgruppen oder Aminogruppen. Bevorzugt sind Farbstoffe mit anionischen wasserlöslichkeitsvermittelnden Gruppen, wie z.B. Carboxyl- oder Sulfonsäuregruppen. Als Beispiele können carboxylierte Azofarbstoffe, carboxylierte Phthalocyaninfarbstoffe und deren Komplexe und carboxylierte Xanthanfarbstoffe aufgezählt werden.

Pigmentdispersionen weisen Pigmentteilchen auf, die hinreichend klein sind, damit sie einen störungsfreien Fluß der Tinte durch die tintenführenden Teile des Druckers, insbesondere die Druckdüsen gewährleisten, die im allgemeinen eine Teilchengröße von 25 bis 500 nm haben. Die Teilchengröße hat auch einen Einfluß auf die Stabilität der Pigmentdispersion. Eine Stabilisierung der Dispersion kann durch oberflächliche Modifizierung der Pigmente, z. B. durch Sulfonierung, Carboxylierung oder Einführung von Aminogruppen erfolgen. Als Beispiel läßt sich oberflächenmodifizierter Ruß, z.B. oberflächlich oxidierter Ruß, anführen. Alternativ und/oder zusätzlich kann die Pigmentdispersion Dispergiermittel, insbesondere polymere Dispergiermittel, zur Stabilisierung enthalten. Geeignete Dispergiermittel sind u.a. Acrylat-Styrol-Blockcopolymere, Pyrrolidon-Acrylat-Blockcopolymere und dergleichen. Bei Vorliegen einer Pigmentdispersion soll im Rahmen der vorliegenden Anmeldung unter "Farbmittel" die Gesamtheit von Pigmentteilchen, Dispergiermittel und gegebenenfalls weiterer Hilfsstoffe verstanden werden.

Bei einer Mikroemulsion liegt ein lösungsmittellöslicher Farbstoff in Lösung in einem Lösungsmittel vor, das mit dem Tintenmedium nicht mischbar ist. Die Farbstofflösung ist im Tintenmedium sehr fein emulgiert. Die Tröpfchengröße der Farbstofflösung ist hinreichend klein, so daß eine stabile Emulsion resultiert. Im allgemeinen ist hierzu ein Emulgator, vorzugsweise ein amphiphiler Emulgator, erforderlich. Emulgatoren mit Carboxylat- und/oder Sulfonsäureseitengruppen sind bevorzugt. Beim Vorliegen einer Mikroemulsion soll im Rahmen der vorliegenden Anmeldung unter "Farbmittel" die Gesamtheit von lösungsmittellöslichem Farbstoff, Lösungsmittel, Emulgator und gegebenenfalls weiterer Hilfsstoffe verstanden werden.

Unter einem "durch ein Fällungsreagenz ausfällbaren Farbmittel" wird ein Farbmittel verstanden, das in Abwesenheit eines Fällungsreagenzes im Tintenmedium eine stabile molekulare Lösung, Dispersion oder Mikroemulsion bildet, durch Zugabe eines geeigneten Fällungsreagenzes jedoch in eine schwerlösliche Verbindung überführt wird.

Das Fällungsreagenz ist in der Lage, das ausfällbare Farbmittel (bzw. dessen farbtragende Bestandteile) in eine schwerlösliche Verbindung zu überführen bzw. eine Agglomeration des Farbmittels (bzw. dessen farbtragender Bestandteile) herbeizuführen. Dies kann dadurch geschehen, daß das Fällungsreagenz eine Veränderung des Milieus des Tintenmediums bewirkt oder am ausfällbaren Farbmittel oder einem seiner Bestandteile eine chemische Veränderung hervorruft, die zu einer Verringerung der Löslichkeit oder zu einer Entstabilisierung einer Dispersion oder Mikroemulsion führt, oder dadurch, daß das Fällungsreagenz und das Farbmittel mineinander eine chemische oder physikalische Wechselwirkung unter Bildung einer schwerlöslichen Verbindung eingehen. Die Bildung einer schwerlöslichen Verbindung verhindert die Migration bzw. Diffusion des Farbstoffs vom Auftragsort der ersten Tinte in Nachbarbezirke, in denen die zweite und/oder dritte Tine aufgetragen ist.

Erfindungsgemäß ist das Fällungsreagenz in der zweiten oder dritten Tinte nicht als solches enthalten, sondern in temporär passivierter Form. "Temporär passiviert" bedeutet, daß keine Fällungsreaktion stattfindet, wenn das ausfällbare Farbmittel und das temporär passivierte Fällungsreagenz vereinigt werden. Durch einen geeigneten Aktivator wird das Fällungsreagenz aus der temporär passivierten Form in die aktive Form überführt. Erst in der aktiven Form ist das Fällungsreagenz in der Lage, das Farbmittel auszufällen. Der Aktivator ist eine Verbindung, die das temporär passivierte Fällungsreagenz aktiviert. Dies kann z.B. durch Erhöhen der Ladung des Fällungsreagenzes, Umkehrung der Ladung des Fällungsreagenzes oder durch Verdrängen des Fällungsreagenzes aus einem Komplex geschehen. Entscheidend ist, daß das temporär passivierte Fällungsreagenz und der Aktivator nicht in derselben Tinte vorliegen, sondern erst beim Druckvorgang in Kontakt miteinander kommen, wenn die entsprechenden Tinten gleichzeitig oder nacheinander aufeinander oder unmittelbar nebeneinander auf ein Substrat gedruckt werden.

Das Fällungsreagenz kann in einer Ausführungform der Erfindung ein multivalentes Metallkation sein, z.B. $Ca^{2+}$, $Cu^{2+}$, $Ni^{2+}$, $La^{3+}$, $Nd^{3+}$, $Y^{3+}$ und $Al^{3+}$. Geeignete Gegenionen für die genannten Kationen können z.B. $NO_3^-$, $F^-$, $Cl^-$, $Br^-$, $I^-$, $CH_3COO^-$ und $SO_4^{2-}$ sein. So können z.B. Calciumacetat, Magnesiumsulfat, Magnesiumacetat, und Aluminiumsulfat eingesetzt werden. Die multivalenten Metallkationen können das ausfällbare Farbmittel, d.h. den löslichen Farbstoff oder die elektrostatisch bzw. elektrostatisch/sterisch stabilisierte Pigmentdispersion oder die Mikroemulsion, dadurch ausfällen, daß sie eine hohe Affinität zu den wasserlöslichmachenden oder stabilisierenden funktionellen Gruppen zeigen. Dadurch wird die Solvatisierbarkeit dieser Gruppen stark reduziert und der gelöste Farbstof bzw. die dispergierten Pigmente verlieren ihre Wasserlöslichkeit und fallen aus. Gleichzeitig haben multivalente Metallkationen durch ihre mehrfach positive Ladung eine hohe Ionenstärke. Diese Eigenschaft fördert zusätzlich die Fällungsreaktion. Durch die Erhöhung der Ionenstärke verkleinert sich der Radius der Helmholtz-Doppelschicht und somit der Abstand zweier dispergierter Teilchen. Wird der Abstand zweier Teilchen unter einen bestimmten Wert verkleinert, agglomerieren diese Teilchen und die Dispersion wird instabil.

Ist das Fällungsreagenz ein multivalentes Metallkation, kann die temporäre Passivierung vorteilhaft durch Komplexbildung erfolgen. Durch den Aktivator wird das multivalente Metallkation aus dem Komplex freigesetzt. Bei der Wahl des Komplexbildners ist darauf zu achten, daß der Komplex mit dem multivalenten Metallkation unter den Bedingungen der Tinte, in denen das komplexierte multivalente Metallkation vorliegt, ausreichend stabil ist, wogegen der Komplex instabil wird, wenn der in der weiteren Tinte enthaltene Aktivator zutritt. Geeignete Komplexbildner sind z.B. EDTA, IDA, CDTA, Aminosäuren, aromatische oder heterocyclische Aminocarbonsäuren, Amine, Aminophosphate, ein- oder mehrwerteige Carbonsäuren.

Der Aktivator kann in diesem Fall ein protonenlieferndes System, wie ein Puffersystem mit einem pH-Wert von vorzugsweise 6 oder weniger, oder Ammoniumionen, sein.

In einer Ausführungsform bildet das multivalente Metallkation $M^{x+}$ mit einem Liganden $L^{y-}$ einen stabilen Komplex, d.h. die Reaktion

$$M^{x+} + L^{y-} \rightarrow ML^{(x-y)}$$

weist eine hohe Komplexbildungskonstante, vorzugsweise pK > 12, insbesondere > 15, auf. Mit der protonierten Form des Liganden $HL^{(1-y)}$ bildet das multivalente Metallkation hingegen keinen stabilen Komplex, d.h. die Komplexbildungskonstante der Reaktion

$$M^{x+} + HL^{(1-y)-} \rightarrow MHL$$

ist klein, vorzugsweise pK < 4, insbesondere < 3.

Vorzugsweise wird der Ligand durch eine möglichst kleine pH-Änderung protoniert bzw. deprotoniert, d.h. die Reaktion

$$L^{y-} + H^{+} \rightarrow HL^{(1-y)}$$

weist einen pK von vorzugweise zwischen 5 und 9 auf.

In einer anderen Ausführungsform der Erfindung ist das temporär passivierte Fällungsreagenz ein Polyamin. Ein geeignetes Beispiel hierfür ist Ethylendiamin.

Die Aktivierung kann durch Protonierung und/oder Quaternisierung erfolgen. Demzufolge ist der Aktivator vorzugsweise eine protonenliefernde Verbindung, wie z.B. eine wäßrige Lösung, vorzugsweise ein Puffersystem, mit einem pH von 6 oder weniger, Ammoniumionen oder dergleichen, oder ein sonstiges Quaternisierungsmittel, wie Dimethylsulfat. Durch die Protonierung bzw. Quaternisierung entstehen aus dem Polyamin Polykationen. Diese fällen das Farbmittel aus, indem eine Vernetzung durch eine Wechselwirkung der kationischen Gruppen des Fällungsreagenzes mit den anionischen Gruppen des Farbmittels stattfindet.

In einer weiteren Ausführungform der Erfindung ist das temporär passivierte Fällungsmittel eine Verbindung mit pH-abhängiger Ionenstärke. Verbindungen mit pH-abhängiger Ionenstärke enthalten im allgemeinen eine oder mehrere protonierbare oder deprotonierbare Gruppen. Vorzugsweise enthält die Verbindung mit pH-abhängiger Ionenstärke eine oder mehrere Gruppen, die aus $NH_2$, $NHR$, $NR_2$, $PO_3H_2$, $PO_3HR$, $PO_3R2$, $SH_2$, $SHR$, $SR_2$, $SO_3H$, $SO_3R$, $COOH$, -CON- und -COS- ausgewählt sind. Besonders bevorzugt ist die Verbindung mit pH-abhängiger Ionenstärke eine schwache Säure, vorzugsweise mit pKs $\geq$ 6, eine schwache Base, vorzugsweise mit pKs $\leq$ 9,5, eine Aminosäure oder ein Aminosphosphat. Geeignet sind z.B. Glutaminsäure, Morpholinopropansulfonsäure (MOPS), Trishydroxymethylaminomethan (TRIS) und Triethanolamin.

Vorzugsweise weist die Verbindung mit pH-abhängiger Ionenstärke bei einem ersten pH eine geringe Ionenstärke auf und erreicht durch eine möglichst geringe pH-Änderung eine hohe Ladung. Das Farbmittel kann durch Erhöhen der Ionenstärke ausgefällt werden. Die Ionenstärke, bei der die Fällung des Farbstoffs beginnt, wird kritische Ionenstärke genannt. Die kritische Ionenstärke hängt vom jeweiligen Farbmittel ab.

Der Aktivator ist ein protonenlieferndes oder protonenaufnehmendes System, vorzugsweise ein wäßrige Lösung mit einem pH, der vom pH-Wert der die Verbindung mit pH-abhängiger Ionenstärke enthaltenden Tinte um mindestens etwa 2, vorzugsweise mindestens etwa 3, pH-Einheiten abweicht. Der Aktivator kann selbst eine Verbindung mit pH-abhängiger Ionenstärke sein, die beim in der Aktivatortinte herrschenden pH eine niedrige Ionenstärke aufweist. Beim Mischen wirkt jeweils eine Verbindung mit pH-abhängiger Ionenstärke als Aktivator auf die andere.

Bei einem bevorzugten erfindungsgemäßen Verfahren weist die Tinte, in der die Verbindung mit pH-abhängiger Ionenstärke vorliegt, einen pH auf, der einer Ionenstärke unterhalb der für die Fällung des Farbmittels kritischen Ionenstärke entspricht, und die den Aktivator enthaltende Tinte weist einen solchen pH auf, daß sich bei Vermischen der Tinten ein pH einstellt, der einer Ionenstärke der Verbindung mit pH-abhängiger Ionenstärke oberhalb der für die Fällung des Farbmittels kritischen Ionenstärke entspricht. Besonders bevorzugt weist die die Verbindung mit pH-abhängiger Ionenstärke enthaltende Tinte eine geringe Pufferungskapazität und die den Aktivator enthaltende Tinte eine hohe Pufferungskapazität auf. Beim Zusammentreffen der Tinten überwiegt der pH der Tinte mit hoher Pufferungskapazität und es stellt sich ein solcher Gesamt-pH ein, der einer hohen Ionenstärke entspricht, und das Farbmittel fällt aus.

Besonders vorteilhafte Ergebnisse werden erzielt, wenn als temporär passiviertes Fällungsreagenz MOPS bei einem pH von etwa 5,8 und als Aktivator Triethanolamin bei einem pH von etwa 9,2 eingesetzt wird. Die Tinten, die die genannten Materialien enthalten, weisen beide eine Leitfähigkeit von etwa 35 mS auf, wobei die Leitfähigkeit als Maß für die Ionenstärke dient. Beim Vermischen der Tinten stellt sich ein pH von etwa 7,5 ein und die Leitfähigkeit steigt auf etwa 60 mS.

Das Tintenmedium ist im allgemeinen wäßrig. Es enthält Wasser oder ein Gemisch aus Wasser und einem oder mehreren wassermischbaren organischen Lösungsmitteln. Die Auswahl eines geeigneten Gemisches richtet sich nach den Anforderungen der jeweiligen Anwendung, wie der gewünschten Oberflächenspannung, dem Farbmittel, der Trocknungszeit und dem zu bedruckenden Substrat. Der Fachmann kann anhand einfacher Versuche ein geeignetes Tintenmedium ermitteln.

Die Erfindung betrifft außerdem ein Tintenset, das eine erste, eine zweite und wahlweise eine dritte Tinte umfaßt und das zur Durchführung des erfindungsgemäßen Verfahrens geeignet ist.

Sämtliche Tinten zur Durchführung des erfindungsgemäßen Verfahrens bzw. des erfindungsgemäßen Tintensets enthalten neben den angesprochenen Materialien in Form des ausfällbaren Farbmittels, des temporär passivierten Fällungsreagenzes und des Aktivators in der Regel weitere übliche Bestandteile. So enthalten die zweite und/ oder dritte Tinte neben dem temporär passivierten Fällungsreagenz bzw. dem Aktivator im allgemeinen einen Farbmittel, das vom ausfällbaren Farbmittel der ersten Tinte verschieden ist. Das Farbmittel der zweiten und/oder dritten Tinte kann gegebenenfalls selbst ein ausfällbares Farbmittel sein.

Die Tinten können Lösungsmittel, wie n-Propanol, 1,2-Butandiol, 2-Isopropyloxyethanol, Benzamid, Benzylakohol, Butyldiglycol, Butylglycol, Butyltriglycol, Butyrolacton, Diisopropanolamin, Dimethylimidazolidanon, Dipropylenglycol-n-propylether, Dipropylenglycolmonobutylether, Dipropylenglycolmomethylether, Ethanol, Ethylacetat, Ethylencarbonat, Ethylenglycolphenylether, Isopropanol, N,N-Butyl-1-ethanolamin, n-Butanol, N-Methylpyrrolidon, Polypropylenglycol, Propylen-Ethylenglycol-Blockpolymer, Propylencarbonat, enthalten. Sie können außerdem Biozide enthalten. Die Tinten können Emulgatoren, wie z.B. Dodecylamin, das Natriumsalz von N-Coco-3-aminobuttersäure, Cocotrimethylammoniumchlorid, Didecylmethylalkoxamoniumpropionat, N-Cocodiaminopropan, N-Oleyl-1,3-diaminopropan, N-Tallow-1,3-diaminopropandioleat, usw., Feuchthaltemittel, wie 1,1,1-Trishydroxymethylpropan, 1,2,6-Hexantriol, 1,3-Dimethylimidazolidinon, 1,4-Butandiol, 1,6-Hexandiol, 2-Methyl-2,4-pentandiol, 2-Hydroxybenzylalkohol, 2-Pyrrolidon, 5-Aminobenzoesäure usw., Verdickungsmittel, wie Alginsäure, Polyvinylpyrrolidon-Polymere und -Copolymere, Alginate, Polyacrylsäuren usw., Tenside, wie Alkylphenyl-PEG, PEG-Stearylether, Alkylpolyglycoside, Alkylsulfonate, ethoxylierte Fettalkohole, Akylsulfopropylammoniumbetaine, Alkylphenylsulfonate, Dimeticonpropolyole, Alkylpyrrolidone usw. enthalten.

Das erfindungsgemäße Tintenstrahl-Druckverfahren bzw. Tintenset umfaßt mindestens zwei Tinten. Es kann jedoch auch drei und mehr Tinten, beispielsweise bis zu sechs Tinten, umfassen. Bei Ausführungsformen mit mehr als zwei bzw. drei Tinten ist wesentlich, daß mindestens zwei bzw. drei Tinten untereinander in funktioneller Wechselwirkung stehen, wie vorstehend beschrieben. Ein temporär passiviertes Fällungsreagenz kann nach Aktivierung nicht nur das Farbmittel einer Tinte, sondern auch einer weiteren Tinte ausfällen. Ebenso kann ein ausfällbares Farbmittel durch verschiedene, in verschiedenen Tinten enthaltene Fällungsreagenzien ausgefällt werden. Es können aber auch in Ausführungsformen mit mehreren Tinten voneinander unabhängige Systeme von Farbmittel/Fällungsreagenz/Aktivator vorliegen.

Neben einer weitgehenden Verbesserung des Bleedings besteht ein wesentlicher Vorteil des erfindungsgemäßen Verfahrens darin, daß eine hohe optische Dichte der auszufällenden Tinte erhalten wird. Dies ist vorzugsweise dann der Fall, wenn die Fällungstinte(n) unter der Tinte mit dem auszufällenden Farbstoff gedruckt wird. Bei dieser Druckart fällt der Farbstoff beim Auftreffen auf das zu bedruckende Substrat unmittelbar aus und wird daran gehindert, in das Medium zu penetrieren.

Die Erfindung soll nun durch Beispiele näher erläutert werden.

Beispiel 1

Dieses Beispiel erläutert die Verwendung von MOPS/Triethanolamin als temporär passiviertes Fällungsreagenz bzw. Aktivator. Nach folgenden Rezepturen wurden drei Testtinten hergestellt:

| Tinte 1: | |
|---|---|
| Cab-o-jet 300 (oberflächenmodifizierter Ruß) | 25 Gew.-% |
| Glycolsäure (pH-Regulator) | 0,06 Gew.- % |
| Surfadon LP 100 (Alkylpyrrolidon; Tensid) | 0,03 Gew.-% |
| 2-Pyrrolidon (Feuchthaltemittel) | 30 Gew.- % |
| Wasser | 44,91 Gew.-% |

| Tinte 2: | |
|---|---|
| 3-Morpholinopropansulfonsäure (temporär passiviertes Fällungsreagenz) | 15 Gew.-% |
| Diethylenglycol (Feuchthaltemitel) | 10 Gew.-% |
| Surfynol 465 (Tensid) | 0,5 Gew.-% |
| Acticid ST (Biocid) | 0,1 Gew.-% |
| Acid red 52 (Farbstoff) | 2,5 Gew.-% |
| Triethanolamin (pH-Regulator) | auf pH 5,8 |
| Wasser | 70,9 Gew.-% |

| Tinte 3: | |
|---|---|
| Triethanolamin (Aktivator) | 5 Gew.-% |

(fortgesetzt)

| Tinte 3: | |
|---|---|
| Diethylenglycol (Feuchthaltemittel) | 10 Gew.-% |
| Surfynol 465 (Tensid) | 0,5 Gew.-% |
| Acticid ST (Biocid) | 0,1 Gew.-% |
| Direct blue 199 (Farbstoff) | 3 Gew.-% |
| 3-Morpholinopropansulfonsäure (pH-Regulator) | auf pH 9,2 |
| Wasser | 81,4 Gew.-% |

Von den drei Testtinten wurden nach dem folgenden Schema Mischungen hergestellt. Die Tinte 3 wurde jeweils tropfenweise zugegeben. Die Art und die Geschwindigkeit der Ausfällung wurde beobachtet. Hierzu wurde das Probegefäß von hinten beleuchtet.

| Mischung | Art der Ausfällung | Geschwindigkeit der Ausfällung |
|---|---|---|
| Tinte 1 und Tinte 3 (10:1) | keine | --- |
| Tinte 2 und Tinte 3 (10:1) | keine | --- |
| Tinte 1, Tinte 2 und Tinte 3 (5:5:1) | fein bis grob | sofort |

Beispiel 2

Dieses Beispiel erläutert die Verwendung von Propylendiamin als temporär passiviertes Fällungsreagenz mit einem Ammoniumacetat/Essigsäure-Puffer als Aktivator.

Nach den folgenden Rezepturen wurden Testtinten hergestellt:

| Tinte 1: | |
|---|---|
| Heucosperse I KS 1720 (stabilisierte Pigmentpräparation) | 8 Gew.-% |
| PEG 600 (Feuchthaltemittel) | 2 Gew.-% |
| PEG 1500 (Feuchthaltemittel) | 1 Gew.-% |
| PEG 4000 (Feuchthaltemittel) | 1,2 Gew.-% |
| Surfadon LP 100 (Alkylpyrrolidon; Tensid) | 0,2 Gew.-% |
| Harnstoff (Feuchthaltemittel) | 2 Gew.- % |
| N,N Dimethylharnstoff (Feuchthaltemittel) | 2 Gew.-% |
| Glycerin (Feuchthaltemittel) | 8,3 Gew.-% |
| Acticid ST (Biocid) | 0,1 Gew.-% |
| Wasser | 75,2 Gew.-% |

| Tinte 2: | |
|---|---|
| Propylendiamin (temporär passiviertes Fällungsreagenz) | 15 Gew.-% |
| Diethylenglycol (Feuchthaltemittl) | 10 Gew.-% |
| Surfynol 465 (Tensid) | 0,5 Gew.-% |
| Acticid ST (Biocid) | 0,1 Gew.-% |
| Acid red 52 (Farbstoff) | 2,5 Gew.-% |
| Reactiv red 180 (Farbstoff) | 1 Gew.-% |
| Essigsäure (pH-Regulator) | auf pH 9 |
| Wasser | 70,9 Gew.-% |

| Tinte 3: | |
|---|---|
| Ammoniumacetat (Aktivator) | 5 Gew.-% |
| Diethylenglycol (Feuchthaltemittel) | 10 Gew.-% |
| Surfynol 465 (Tensid) | 0,5 Gew.-% |
| Acticid ST (Biocid) | 0,1 Gew.-% |
| Direct blue 199 (Farbstoff) | 3 Gew.-% |
| Essigsäure (pH-Regulator) | auf pH 5,8 |
| Wasser | 81,4 Gew.-% |

Von den drei Testtinten wurden nach dem folgenden Schema Mischungen hergestellt. Die Tinte 3 wurde jeweils tropfenweise zugegeben. Die Art und die Geschwindigkeit der Ausfällung wurde beobachtet. Hierzu wurde das Probegefäß von hinten beleuchtet.

| Mischung | Art der Ausfällung | Geschwindigkeit der Ausfällung |
|---|---|---|
| Tinte 1 und Tinte 3 (10:1) | keine | --- |
| Tinte 2 und Tinte 3 (10:1) | keine | --- |
| Tinte 1, Tinte 2 und Tinte 3 (5:5:1) | grobe | sofort |

Beispiel 3

Dieses Beispiel erläutert die Verwendung eines Komplexes von Calciumacetat und Iminodiessigsäure als temporär passiviertes Fällungsreagenz mit einem Ammoniumacetat/Essigsäure-Puffer als Aktivator.

| Tinte 1: | |
|---|---|
| Heucosperse I KS 1720 (stabilisierte Pigmentpräparation) | 8 Gew.-% |
| PEG 600 (Feuchthaltemittel) | 2 Gew.-% |
| PEG 1500 (Feuchthaltemittel) | 1 Gew.-% |
| PEG 4000 (Feuchthaltemittel) | 1,2 Gew.-% |
| Surfadon LP 100 (Alkylpyrrolidon; Tensid) | 0,2 Gew.-% |
| Harnstoff (Feuchthaltemittel) | 2 Gew.-% |
| N,N-Dimethylharnstoff (Feuchthaltemittel) | 2 Gew.- % |
| Glycerin (Feuchthaltemittel) | 8,3 Gew.-% |
| Acticid ST (Biocid) | 0,1 Gew.-% |
| Wasser | 75,2 Gew.-% |

| Tinte 2: | |
|---|---|
| Calciumacetat (Fällungsreagenz) | 5 Gew.-% |
| Iminodiessigsäure-dinatriumsalz (Komplexbildner) | 3,9 Gew.- % |
| Diethylenglycol (Feuchthaltemittel) | 10 Gew.- % |
| Surfynol 465 (Tensid) | 0,5 Gew.-% |
| Acticid ST (Biocid) | 0,1 Gew.-% |
| Acid red 52 (Farbstoff) | 2,5 Gew.-% |
| Reactiv red 180 (Farbstoff) | 1 Gew.-% |
| Wasser | 70,9 Gew.-% |

| Tinte 3: | |
|---|---|
| Ammoniumacetat (Aktivator) | 5 Gew.- % |

(fortgesetzt)

| Tinte 3: | |
|---|---|
| Diethylenglycol (Feuchthaltemittel) | 10 Gew.-% |
| Surfynol 465 (Tensid) | 0,5 Gew.-% |
| Acticid ST (Biocid) | 0,1 Gew.-% |
| Direct blue 199 (Farbstoff) | 3 Gew.-% |
| Essigsäure (pH-Regulator) | auf pH 5,8 |
| Wasser | 81,4 Gew.- % |

Von den drei Testtinten wurden nach dem folgenden Schema Mischungen hergestellt. Die Tinte 3 wurde jeweils tropfenweise zugegeben. Die Art und die Geschwindigkeit der Ausfällung wurde beobachtet. Hierzu wurde das Probegefäß von hinten beleuchtet.

| Mischung | Art der Ausfällung | Geschwindigkeit der Ausfällung |
|---|---|---|
| Tinte 1 und Tinte 3 (10:1) | sehr klein | nach Stunden |
| Tinte 2 und Tinte 3 (10:1) | keine | --- |
| Tinte 1, Tinte 2 und Tinte 3 (5:5:1) | grob | sofort |

**Patentansprüche**

1.  Tintenstrahl-Druckverfahren, bei dem eine erste, eine zweite und wahlweise eine dritte bzw. weitere Tinte aufeinander oder unmittelbar nebeneinander gedruckt werden, dadurch gekennzeichnet, daß

    (i) die erste Tinte ein durch ein Fällungsreagenz ausfällbares Farbmittel,
    (ii) die erste oder zweite Tinte das Fällungsreagenz in temporär passivierter Form und
    (iii) die erste, zweite oder dritte Tinte einen Aktivator für das temporär passivierte Fällungsreagenz enthält,

    mit der Maßgabe, daß das temporär passivierte Fällungsreagenz und der Aktivator nicht in derselben Tinte vorliegen.

2.  Tintenstrahl-Druckverfahren nach Anspruch 1, dadurch gekennzeichnet, daß das ausfällbare Farbmittel und das temporär passivierte Fällungsreagenz in der ersten Tinte enthalten sind und der Aktivator in der zweiten Tinte enthalten ist.

3.  Tintenstrahl-Druckverfahren nach Anspruch 1, dadurch gekennzeichnet, daß das ausfällbare Farbmittel und der Aktivator in der ersten Tinte enthalten sind und das temporär passivierte Fällungsreagenz in der zweiten Tinte enthalten ist.

4.  Tintenstrahl-Druckverfahren nach Anspruch 1, dadurch gekennzeichnet, daß das ausfällbare Farbmittel in der ersten Tinte enthalten ist, das temporär passivierte Fällungsreagenz in der zweiten Tinte enthalten ist und der Aktivator in der dritten Tinte enthalten ist.

5.  Tintenstrahl-Druckverfahren nach einem der vorstehenden Ansprüche, dadurch gekennzeichnet, daß das durch das Fällungsmittel ausfällbare Farbmittel ein schwarzes Farbmittel ist.

6.  Tintenstrahl-Druckverfahren nach einem der vorstehenden Ansprüche, dadurch gekennzeichnet, daß das ausfällbare Farbmittel ein wasserlöslicher Farbstoff, eine elektrostatisch oder elektrostatisch/sterisch stabilisierte Pigmentdispersion oder eine Mikroemulsion ist.

7.  Tintenstrahl-Druckverfahren nach einem der vorstehenden Ansprüche, dadurch gekennzeichnet, daß das temporär passivierte Fällungsreagenz ein komplexiertes multivalentes Metallkation ist, wobei das multivalente Metallkation durch den Aktivator aus dem Komplex freigesetzt werden kann.

**8.** Tintenstrahl-Druckverfahren nach Anspruch 7, dadurch gekennzeichnet, daß das multivalente Metallkation Ca$^{2+}$, Mg$^{2+}$ und/oder Al$^{3+}$ ist.

**9.** Tintenstrahl-Druckverfahren nach Anspruch 7 oder 8, dadurch gekennzeichnet, daß das multivalente Metallkation durch einen Komplexbildner, ausgewählt aus IDTA, IDA, CDTA, Aminosäuren, aromatischen oder heterocyclischen Aminocarbonsäuren, Aminen, Aminophosphaten und Carbonsäuren, komplexiert ist.

**10.** Tintenstrahl-Druckverfahrn nach einem der Ansprüche 7 bis 9, dadurch gekennzeichnet, daß der Aktivator ein Puffersystem mit einem pH-Wert von 6 oder weniger ist.

**11.** Tintenstrahl-Druckverfahren nach einem der Ansprüche 1 bis 6, dadurch gekennzeichnet, daß das temporär passivierte Fällungsreagenz ein Polyamin ist.

**12.** Tintenstrahl-Druckverfahren nach Anspruch 11, dadurch gekennzeichnet, daß der Aktivator eine wäßrige Lösung mit einem pH von 6 oder weniger ist.

**13.** Tintenstrahl-Druckverfahren nach einem der Ansprüche 1 bis 6, dadurch gekennzeichnet, daß das temporär passivierte Fällungsmittel eine Verbindung mit pH-abhängiger Ionenstärke ist.

**14.** Tintenstrahl-Druckverfahren nach Anspruch 13, dadurch gekennzeichnet, daß die Verbindung mit pH-abhängiger Ionenstärke eine oder mehrere protonierbare oder deprotonierbare Gruppen enthält.

**15.** Tintenstrahl-Druckverfahren nach Anspruch 14, dadurch gekennzeichnet, daß die Verbindung mit pH-abhängiger Ionenstärke eine oder mehrere Gruppen, ausgewählt aus NH$_2$, NHR, NR$_2$, PO$_3$H$_2$, PO$_3$HR, PO$_3$R2, SH$_2$, SHR, SR$_2$, SO$_3$H, SO$_3$R, COOH, -CON- und -COS-, enthält.

**16.** Tintenstrahl-Druckverfahren nach Anspruch 15, dadurch gekennzeichnet, daß die Verbindung mit pH-abhängiger Ionenstärke eine schwache Säure, eine schwache Base, eine Aminosäure oder ein Aminophosphat ist.

**17.** Tintenstrahl-Druckverfahren nach einem der Ansprüche 13 bis 16, dadurch gekennzeichnet, daß der Aktivator eine wäßrige Lösung mit einem pH ist, der vom pH-Wert der die Verbindung mit pH-abhängiger Ionenstärke enthaltenden Tinte um mindestens etwa 2 pH-Einheiten abweicht.

**18.** Tintenstrahl-Druckverfahren nach einem der Ansprüche 13 bis 17, dadurch gekennzeichnet, daß die Tinte, in der die Verbindung mit pH-abhängiger Ionenstärke vorliegt, einen pH aufweist, der einer Ionenstärke unterhalb der für die Fällung des Farbmittels kritischen Ionenstärke entspricht, und die den Aktivator enthaltende Tinte einen solchen pH aufweist, daß sich beim Vermischen der Tinten ein pH einstellt, der einer Ionenstärke oberhalb der für die Fällung des Farbmittels kritischen Ionenstärke entspricht.

**19.** Tintenstrahl-Druckverfahren nach Anspruch 18, dadurch gekennzeichnet, daß die die Verbindung mit pH-abhängiger Ionenstärke enthaltende Tinte eine geringe Pufferungskapazität und die den Aktivator enthaltende Tinte eine hohe Pufferungskapazität aufweist.

**20.** Tintenset für den Mehrfarben-Tintenstrahldruck, umfassend eine erste, eine zweite und wahlweise eine dritte bzw. weitere Tinte, dadurch gekennzeichnet, daß

(i) die erste Tinte ein durch ein Fällungsreagenz ausfällbares Farbmittel,
(ii) die erste oder zweite Tinte das Fällungsreagenz in temporär passivierter Form und
(iii) die erste, zweite oder dritte Tinte einen Aktivator für das temporär passivierte Fällungsreagenz enthält,

mit der Maßgabe, daß das temporär passivierte Fällungsreagenz und der Aktivator nicht in derselben Tinte vorliegen.

**Claims**

**1.** Ink-jet printing process in which a first, a second and optionally a third or additional ink are printed over one another or directly adjacent to one another, characterized in that

(i) the first ink comprises a colorant which can be precipitated by means of a precipitating reagent,

(ii) the first or second ink comprises the precipitating reagent in temporarily passivated form and

(iii) the first, second or third ink comprises an activator for the temporarily passivated precipitating reagent,

with the proviso that the temporarily passivated precipitating reagent and the activator are not present in the same ink.

2.  Ink-jet printing process according to Claim 1, characterized in that the precipitable colorant and the temporarily passivated precipitating reagent are present in the first ink and the activator is present in the second ink.

3.  Ink-jet printing process according to Claim 1, characterized in that the precipitable colorant and the activator are present in the first ink and the temporarily passivated precipitating reagent is present in the second ink.

4.  Ink-jet printing process according to Claim 1, characterized in that the precipitable colorant is present in the first ink, the temporarily passivated precipitating reagent in the second ink and the activator in the third ink.

5.  Ink-jet printing process according to one of the preceding claims, characterized in that the colorant which can be precipitated by means of the precipitant is a black colorant.

6.  Ink-jet printing process according to one of the preceding claims, characterized in that the precipitable colorant is a water-soluble dye, an electrostatically or electrostatically/sterically stabilized pigment dispersion or a microemulsion.

7.  Ink-jet printing process according to one of the preceding claims, characterized in that the temporarily passivated precipitating reagent is. a complexed multivalent metal cation and can be liberated from the complex by the activator.

8.  Ink-jet printing process according to Claim 7, characterized in that the multivalent metal cation is $Ca^{2+}$, $Mg^{2+}$ and/or $Al^{3+}$.

9.  Ink-jet printing process according to Claim 7 or 8, characterized in that the multivalent metal cation is complexed by means of a complexing agent selected from IDTA, IDA, CDTA, amino acids, aromatic or heterocyclic amino carboxylic acids, amines, amino phosphates and carboxylic acids.

10.  Ink-jet printing process according to one of Claims 7 to 9, characterized in that the activator is a buffer system having a pH of 6 or less.

11.  Ink-jet printing process according to one of Claims 1 to 6, characterized in that the temporarily passivated precipitating reagent is a polyamine.

12.  Ink-jet printing process according to Claim 11, characterized in that the activator is an aqueous solution having a pH of 6 or less.

13.  Ink-jet printing process according to one of Claims 1 to 6, characterized in that the temporarily passivated precipitant is a compound having a pH-dependent ionic strength.

14.  Ink-jet printing process according to Claim 13, characterized in that the compound having a pH-dependent ionic strength comprises one or more protonatable or deprotonatable groups.

15.  Ink-jet printing process according to Claim 14, characterized in that the compound having a pH-dependent ionic strength comprises one or more groups selected from $NH_2$, $NHR$, $NR_2$, $PO_3H_2$, $PO_3HR$, $PO_3R_2$, $SH_2$, $SHR$, $SR_2$, $SO_3H$, $SO_3R$, $COOH$, $-CON-$ and $-COS-$.

16.  Ink-jet printing process according to Claim 15, characterized in that the compound having a pH-dependent ionic strength is a weak acid, a weak base, an amino acid or an amino phosphate.

17.  Ink-jet printing process according to one of Claims 13 to 16, characterized in that the activator is an aqueous solution having a pH which differs by at least about 2 pH units from the pH of the ink comprising the compound

**EP 0 878 521 B1**

having a pH-dependent ionic strength.

18. Ink-jet printing process according to one of Claims 13 to 17, characterized in that the ink in which the compound having a pH-dependent ionic strength is present has a pH which corresponds to an ionic strength below the ionic strength that is critical for the precipitation of the colorant, and the ink comprising the activator has a pH such that when the inks are mixed a pH is established which corresponds to an ionic strength above the ionic strength that is critical for the precipitation of the colorant.

19. Ink-jet printing process according to Claim 18, characterized in that the ink comprising the compound having a pH-dependent ionic strength has a low buffering capacity and the ink comprising the activator has a high buffering capacity.

20. Ink set for multicolour ink-jet printing, comprising a first, a second and optionally a third or additional ink, characterized in that

(i) the first ink comprises a colorant which can be precipitated by means of a precipitating reagent,
(ii) the first or second ink comprises the precipitating reagent in temporarily passivated form and
(iii) the first, second or third ink comprises an activator for the temporarily passivated precipitating reagent,

with the proviso that the temporarily passivated precipitating reagent and the activator are not present in the same ink.

**Revendications**

1. Procédé d'impression par jet d'encre dans lequel on imprime une première, une seconde et éventuellement une troisième encre et d'autres encres supplémentaires les unes par-dessus les autres ou directement côte à côte, caractérisé en ce que

(i) la première encre contient un colorant pouvant précipiter au moyen d'un réactif de précipitation,
(ii) la première ou la seconde encre contient le réactif de précipitation sous une forme temporairement passivée, et
(iii) la première, seconde ou troisième encre contient un activateur pour le réactif de précipitation temporairement passivé,

avec la condition que le réactif de précipitation temporairement passivé et l'activateur ne soient pas présents dans la même encre.

2. Procédé d'impression par jet d'encre selon la revendication 1, caractérisé en ce que le colorant pouvant précipiter et le réactif de précipitation temporairement passivé sont contenus dans la première encre, et l'activateur est contenu dans la seconde encre.

3. Procédé d'impression par jet d'encre selon la revendication 1, caractérisé en ce que le colorant pouvant précipiter et l'activateur sont contenus dans la première encre, et le réactif de précipitation temporairement passivé est contenu dans la seconde encre.

4. Procédé d'impression par jet d'encre selon la revendication 1, caractérisé en ce que le colorant pouvant précipiter est contenu dans la première encre, le réactif de précipitation temporairement passivé est contenu dans la seconde encre, et l'activateur est contenu dans la troisième encre.

5. Procédé d'impression par jet d'encre selon l'une des revendications précédentes, caractérisé en ce que le colorant pouvant précipiter au moyen de l'agent de précipitation est un colorant noir.

6. Procédé d'impression par jet d'encre selon l'une des revendications précédentes, caractérisé en ce que le colorant pouvant précipiter est un colorant soluble dans l'eau, une dispersion de pigment stabilisée du point de vue électrostatique ou électrostatique/stérique ou une micro-émulsion.

7. Procédé d'impression par jet d'encre selon l'une des revendications précédentes, caractérisé en ce que le réactif de précipitation temporairement passivé est un cation de métal polyvalent complexé, ledit cation de métal polyvalent pouvant être libéré du complexe par l'activateur.

**8.** Procédé d'impression par jet d'encre selon la revendication 7, caractérisé en ce que le cation de métal polyvalent est $Ca^{2+}$, $Mg^{2+}$ et/ou $Al^{3+}$.

**9.** Procédé d'impression par jet d'encre selon la revendication 7 ou 8, caractérisé en ce que le cation de métal polyvalent est transformé en un complexe au moyen d'un agent complexant choisi parmi IDTA, IDA, CDTA, des aminoacides, des acides aminocarboxyliques aromatiques ou hétérocycliques, des amines, des aminophosphates et des acides carboxyliques.

**10.** Procédé d'impression par jet d'encre selon l'une des revendications 7 à 9, caractérisé en ce que l'activateur est un système de tampon ayant une valeur de pH de 6 ou moins.

**11.** Procédé d'impression par jet d'encre selon l'une des revendications 1 à 6, caractérisé en ce que le réactif de précipitation temporairement passivé est une polyamine.

**12.** Procédé d'impression par jet d'encre selon la revendication 11, caractérisé en ce que l'activateur est une solution aqueuse ayant un pH de 6 ou moins.

**13.** Procédé d'impression par jet d'encre selon l'une des revendications 1 à 6, caractérisé en ce que l'agent de précipitation temporairement passivé est un composé ayant une force ionique dépendante du pH.

**14.** Procédé d'impression par jet d'encre selon la revendication 13, caractérisé en ce que le composé ayant une force ionique dépendante du pH contient un ou plusieurs groupes pouvant être protonés ou déprotonés.

**15.** Procédé d'impression par jet d'encre selon la revendication 14, caractérisé en ce que le composé ayant une force ionique dépendante du pH contient un ou plusieurs groupes choisis parmi $NH_2$, $NHR$, $NR_2$, $PO_3H_2$, $PO_3HR$, $PO_3R_2$, $SH_2$, $SHR$, $SR_2$, $SO_3H$, $SO_3R$, COOH, -CON- et -COS-.

**16.** Procédé d'impression par jet d'encre selon la revendication 15, caractérisé en ce que le composé ayant une force ionique dépendante du pH est un acide faible, une base faible, un amino-acide ou un aminophosphate.

**17.** Procédé d'impression par jet d'encre selon l'une des revendications 13 à 16, caractérisé en ce que l'activateur est une solution aqueuse dont le pH s'écarte d'au moins environ 2 unités de pH par rapport au pH de l'encre contenant le composé ayant une force ionique dépendante du pH.

**18.** Procédé d'impression par jet d'encre selon l'une des revendications 13 à 17, caractérisé en ce que l'encre dans laquelle est contenu le composé ayant une force ionique dépendante du pH présente un pH qui correspond à une force ionique inférieure à la force ionique critique pour la précipitation du colorant, et l'encre contenant l'activateur présente un pH tel que lors du mélange des encres, il s'établit un pH qui correspond à une force ionique supérieure à la force ionique critique pour la précipitation du colorant.

**19.** Procédé d'impression par jet d'encre selon la revendication 18, caractérisé en ce que l'encre contenant le composé ayant une force ionique dépendante du pH a un faible pouvoir de tamponnage, et l'encre contenant l'activateur a un fort pouvoir de tamponnage.

**20.** Cartouche d'encre pour l'impression polychrome par jet d'encre, comprenant une première, une seconde et éventuellement une troisième encre et d'autres encres supplémentaires, caractérisée en ce que

(i) la première encre contient un colorant pouvant précipiter au moyen d'un réactif de précipitation,
(ii) la première ou la seconde encre contient le réactif de précipitation sous une forme temporairement passivée, et
(iii) la première, seconde ou troisième encre contient un activateur pour le réactif de précipitation temporairement passivé,

avec la condition que le réactif de précipitation temporairement passivé et l'activateur ne soient pas présents dans la même encre.